# EUROPEAN PATENT SPECIFICATION

(11) **EP 1 600 910 B1**
(45) Date of publication and mention of the grant of the patent: **25.03.2009**
(21) Application number: 05252754.6
(22) Date of filing: 04.05.2005
(51) Int. Cl.: G08G 1/0967, G08G 1/0968

(54) **System and method for dynamic navigational route selection**
System und Verfahren zur dynamischen Auswahl einer Navigationsroute
Système et procédé pour le choix dynamique d'une route de navigation

(30) Priority: 18.05.2004 US 847817
(43) Date of publication of application: 30.11.2005
(73) Proprietor: Agilent Technologies, Inc., Santa Clara, CA 95051 (US)
(72) Inventor: Hamilton, Bruce, Menlo Park, California (US); Liu, Jerry, Sunnyvale, CA 94086 (US)
(74) Representative: Exell, Jonathan Mark

(56) References cited:
- DE-A1- 10 037 852
- US-A1- 2002 120 390
- US-A1- 2003 009 277
- US-A1- 2004 034 464

## Description

This invention relates to navigation systems and more particularly to systems and methods for dynamic route selection in a navigation system based upon historically available traffic delay data as well as transient traffic delay data.

### BACKGROUND OF THE INVENTION

It has become common practice to use car navigational systems (some of which obtain their positional data from Global Positioning Systems (GPS)) to allow drivers to set desired end-points of a trip. The user's navigation system then selects a route based upon the determined position of the user. This route is usually a combination of surface streets, highways and limited access highways. The user could ask the system to avoid certain types of roads, such as limited access highways, if desired. However, every command given to such a system is distracting from other tasks, such as driving, and takes time as well as presupposing a knowledge of the available routes.

The navigation system then, based upon the given end-points, and any other selected criteria, determines the best route. Typically, drivers desire a route having the fastest transit time between the given end-points. This fastest transit time can be calculated by the system assigning a speed for each segment (usually based on street type) of the route and then adding together the various calculated individual transit times to select the combination of streets or routes yielding the fastest anticipated transit time between the given end-points. Such systems do not take into consideration known traffic delays on given routes, such as rush-hour bridge congestion, and also do not take into account transient delays, such as accidents, highway repair, and other delays on certain routes.

While such delay information is often available, for example, from the radio, this information then would require the navigation device user (who is often the driver) to enter information into the navigation system in order to obtain alternate routings. This presupposes that the user knows the area in which the user is navigating. Such a presupposition is usually contrary to the reason why the navigation device is being used to begin with. However, even if the user had information about a traffic delay, or about a traditionally slow route at a given time, just inputting such information into the navigation device is often physically difficult, particularly when transient delay information arrives after the trip has started. When the user is new to an area, for example, when using a rental car in an unfamiliar city, any such manually provided alternate information is not a viable option. In addition, for safety reasons, navigational systems often will not accept user input while the vehicle is operational. US 2003/0009277 discloses a system and method for determining and disseminating current traffic information.

### BRIEF SUMMARY OF THE INVENTION

According to an aspect of the present invention, there is provided a vehicle navigation system according to claim 1. According to another aspect of the present invention, there is provided a method according to claim 7. In one embodiment, a navigation system and method factors into its routing decisions information pertaining to transient delays encountered from time to time. One example of a transient delay is accident information obtained from currently available broadcast traffic flow sources. The system also factors in historically available traffic delay data based on time of day or other parameters, as well as data available from other vehicles traveling the same roadway. These "other" vehicles could be going in the same direction as the user (but ahead of the user), or the "other" vehicles could be going in the opposite direction and giving information on past travel conditions. Typically, this information would be in terms of speeds on certain roadway segments.

The navigation system keeps track of the routes traveled by the vehicle (or user) and the times of transit of such routes. Thus, when a user requests a route based upon given end-points, the navigation system can use its own stored historical data, as well as currently available traffic delay data, to calculate and announce a given route. This is accomplished without requiring the user to enter any alternate data other than the given end-points and other normal parameters. In some embodiments, the user may answer questions presented by the navigation system, all of which can be accomplished verbally, if desired.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

FIGURE 1 shows one embodiment of a sample screen of a navigation system display;

FIGURE 2 is a listing of transit times for certain routes;

FIGURE 3A is an illustration of a calculation of a non-rush hour times for various routes of the display of FIGURE 1;

FIGURE 3B is the determined route based upon the calculation of FIGURE 3A;

FIGURE 4A are the calculations for certain routes for the morning rush hour;

FIGURE 4B is the determined route based upon the calculations of FIGURE 4A;

FIGURE 5A is the calculations for the morning rush hour with an accident on one of the routes;

FIGURE 5B is the determined route based upon the calculations of FIGURE 5A;

FIGURES 5C and 5D show determined routes made certain times after FIGURE 5B showing changes in the routing;

FIGURE 6 shows a block diagram of one embodiment of the system for controlling routing; and

FIGURE 7 shows a flow chart of one embodiment of a portion of a navigational system.

### DETAILED DESCRIPTION OF THE INVENTION

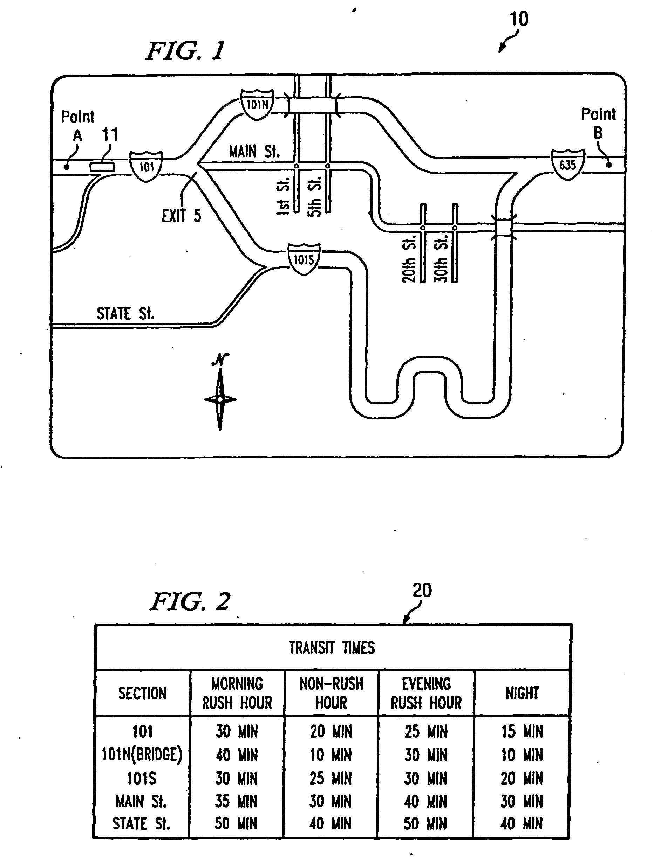

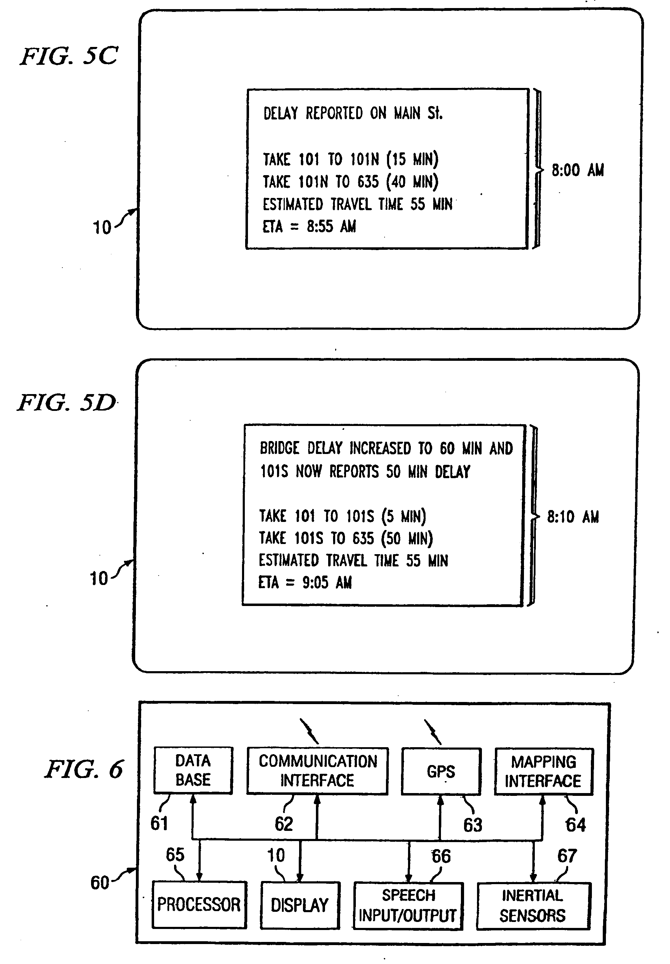

Turning now to FIGURE 1, there is shown one embodiment of a navigation display screen 10 which is part of navigation system 60 (FIGURE 6). Display screen 10, can if desired, include touch sensitive areas, and can include audio communication and text messages. Based upon the position of a given party, for example user 11, and instructions input into that party's navigation system, a map is generated showing the routes between a set of points A and B. Points A and B can be keypunched into system 60, or could be verbally stated. Point A and point B may be a trip that user 11 makes every day, for example from home to work, on the other hand, the trip between points A and B could be new for this user. The user would verbally or otherwise enter into system 60 preferences, such as use limited access highways when possible, or in some cases use city streets when possible. Most often, the user would have a preference to move between point A and point B in the quickest possible time. As user 11 moves between points A and B, display 10 changes to show the user's progress by for example, moving the car icon along the user's path. This positional movement is controlled based on GPS data arriving at the user's vehicle.

Systems for providing maps on displays, such as on display 10 upon different parameters input by the user are well known for navigation systems. In a typical situation, the system breaks each trip into sub-routes and uses the assigned speed for that sub-route to calculate an anticipated transit time for the trip. For example, if a particular sub-route is a limited access highway, an assigned speed might be 80.46 km/h (50 mph). If the sub-route is a surface street, the assigned speed might be 40.23 km/h (25 mph). Thus, the system, knowing whether a road is a limited access road or a surface street, will assign travel times based upon the assigned speed and distance of each segment. Thus, the system derives an overall route having the shortest transit time, assuming a short transit time is the desired metric.

FIGURE 2 shows chart 20 having an example of transit times for the map on display 10 of FIGURE 1. Route 101 shows a morning rush hour transit time of 30 minutes and a non-rush hour transit time of 20 minutes. While route 101N (which contains a major bridge) shows a morning rush hour time of 40 minutes and a non-morning rush hour time of 10 minutes. Times are shown for roads 101, 101N, 101S, Main St. and State St. These times are shown for morning rush hour, non-rush hour, evening rush hour, and night. Of course, this is a illustration only and many other times and sub-routes will be stored. The transit times for these sub-routes are derived from known transit speeds (multiplied by the distance of the sub-route). While transit times are shown herein for illustration purposes, the system, in all likelihood, would store the speed information for various times of day as obtained from any number of sources. The time of day criteria could be time of day, day of week, week of the year, etc., specific so as to adjust for winter, summer, weekends, holidays, vacations, etc.

The times could be straight-forward calculations, as discussed above. But, more accurate times can be achieved if the stored speeds (or times) were to be determined by prior actual driving speeds (or times) of this user. Alternately, the system could track a number of users and obtain a statistical average, which could change periodically. As discussed above, the system could also obtain very current information from users currently traveling (or just recently traveling) over the various sub-routes of the desired route. This current information could be delivered to the vehicle via any wireless media which could include bluetooth, wifi, or any type of broadcast signals. Also, the information could be delivered as an email message, perhaps delivered to a cell phone (or computer) associated with the vehicle, or with the user. Some of this information could be, for example, stored in data storage along the roadway and transmitted to vehicles (or requested by vehicles) as they pass in proximity to a data storage location. This information can be, for example, shared by data transfer from other passing vehicles or relayed from other storage media in other locations.

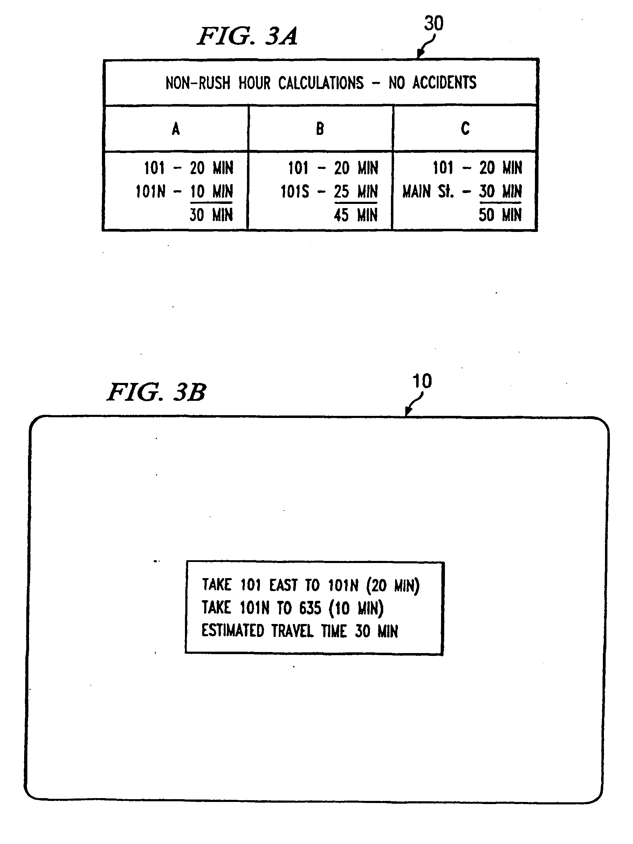

Turning now to FIGURE 3A, assume a non-rush hour calculation with no accidents. In column A of chart 30 the time using routes 101 and 101N is 30 minutes. Whereas, under column B the time using route 101 and 101S is 45 minutes. Under chart C, the time using route 101N and surface Main St. is 50 minutes. Thus, the calculation would show that a user starting at point A and desiring to go to point B in the quickest possible time should follow the routes in column A.

FIGURE 3B shows screen 10 displaying the route to the user. By using 101 east to route 101N and taking 101N to 635, the driving time is estimated at 30 minutes. This driving time, as discussed, is based upon the times shown in FIGURE 2, which, in turn, are based upon the times statistically determined by drivers driving over these routes at various times.

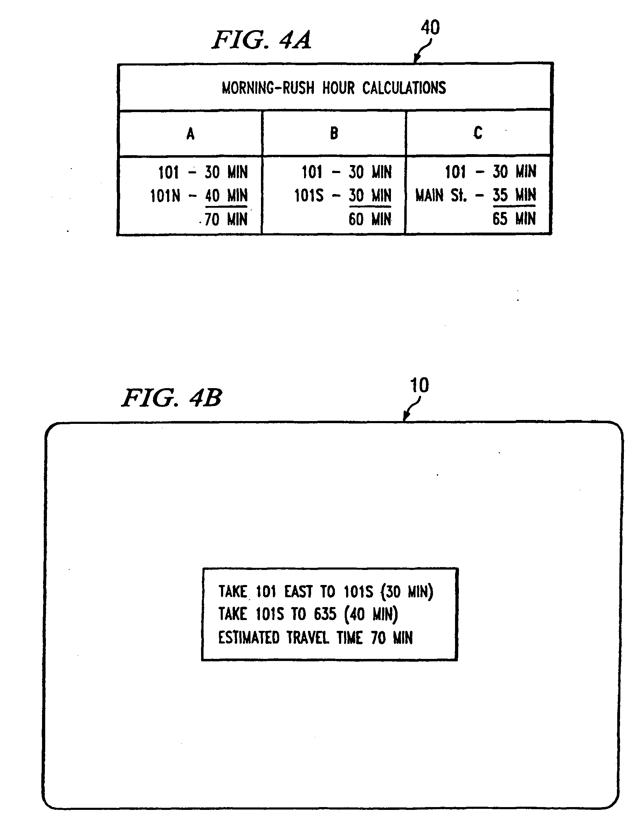

Turning now to FIGURE 4A, chart 40 shows sample morning rush hour calculations. It is clear that the routes shown in column B during morning rush hour are better, even though the distance using route 101S is much longer. This is due to delays on the bridge section of 101N. Thus, as shown in FIGURE 4B, the route would be to take 101E to 101S and then take route 101S to route 635 for a total estimated driving time of 70 minutes. The user would not have to make any changes or add any other keypunches or other information other than to just say (by whatever means), "Take me to point B in the quickest possible time". Since the system has the present location of the user, the end-points of the trip are thus defined.

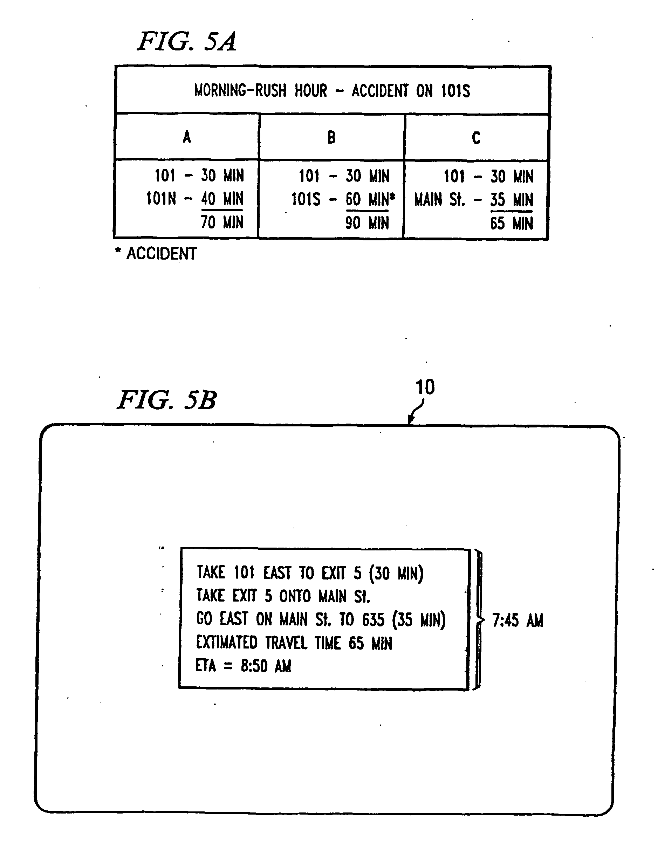

FIGURE 5A shows sample calculations during the morning rush hour when there's an accident on 101S. The accident is shown in column B where 101S is shown as 60 minutes as opposed to the 30 minutes shown in FIGURE 4A. This calculation then results in a surface road (main street) having the fastest travel time, as shown in FIGURE 5B, display 10 (which can be audio, or a combination of audio and graphics) suggest taking 101 East to exit 5 and then taking Main street east to route 635. Estimated travel time is 65 minutes with an estimated arrival time (ETA) of 8:50 am. As noted in FIGURE 5B, this calculation was made at 7:45 am when the user began the journey from point A.

The system can be programmed to repeat the travel time calculation at periodic times. These periodic times could be every minute, every 5 minutes, every 15 minutes, or perhaps only when new data becomes available. In the embodiment shown, a recalculation is made at 8:00 am, as shown in FIGURE 5C when a delay (or reduced average speed) is reported on Main Street. The navigation system "knows" where the user is at 8:00 am. In this situation, the user is still on route 101. Alternatively, a calculation can be made as to where the user is at anytime, for example, since this time is only 15 minutes after the 7:45 am start time, the calculations show that the user would only be 15 minutes into his or her drive at that point and thus still on route 101. Based on this new information (the delay on Main Street), a reported change would take place such that the user would be told to take 101 to 101N which is now 15 minutes away. The user would be instructed to take 101N (instead of Main Street) to route 635. This changed routing would take 55 minutes, yielding an estimated arrival time of 8:55 am.

FIGURE 5B shows that at 8:10 am the bridge delay on route 101N has increased to 60 minutes and that route 101S is now reporting only a 50 minute delay. Since the user is still 5 minutes away from the cutoff to 101N the system instructs the user to take 101 to 101S and to take 101S to route 635. This yields an estimated travel time of 55 minutes from this point and an estimated arrival time of 9:05 am.

As discussed above, the route has been dynamically changed twice during the trip, all based on newly arriving information and without intervention by the user. This information can be, for example, obtained from travel reports or other traffic or weather conditions. The traffic conditions can be actual observations of delays or could result from data obtained directly from other vehicles traveling the same roads as discussed above. In such a situation, statistical data from actual travel times can be used dynamically to help in establishing a route for any given user.

FIGURE 6 shows one embodiment of a schematic of system 60 used to control the operations just discussed. Database 61 contains at least some of the information pertaining to route times and prior travel times as discussed above. Communication interface 62 receives and transmits information pertaining to delays and other information pertaining to routes. Communication interface 62 also communicates with the user to inform the user as to which routes to take. This communication can be on a screen (such as screen 10 as shown above) or verbally (such as speech output/output 66) or graphically (such as mapping interface 64). This communication can be controlled, if desired, by speech input/output control 66. GPS system 63 receives signals from satellites and other towers and uses those signals to calculate position and time between positions so as to give a precise location for the user. System can accept other input via inertial sensors 67. These inertial sensors would pick up tire rotation, change in direction, etc. to help identify the location and speed of the user. Information from GPS 63 is used both locally, and if desired, by other units (such as other vehicles) or a central system (not shown) to help plot the route to be taken. The information from GPS 63 is also used for statistical analysis to determine transit speeds between points. Mapping interface 64 operates to control the maps and to display the route information for communication to the user. The elements of system 60 operate under control of processor 65.

Note that system 60 can be arranged to keep track of actual transit speeds (or times) of various other vehicles as they move along segments of the desired route. Based on these actual speeds (or times), the system could, if desired, change the route from the original calculated route to the route showing the new fastest actual transit time. Typically, driving times (and delayed transit times) are obtained from announcers and radio broadcasts which reduced (or speeded up) speeds are obtained from other vehicles or roadway measurements.

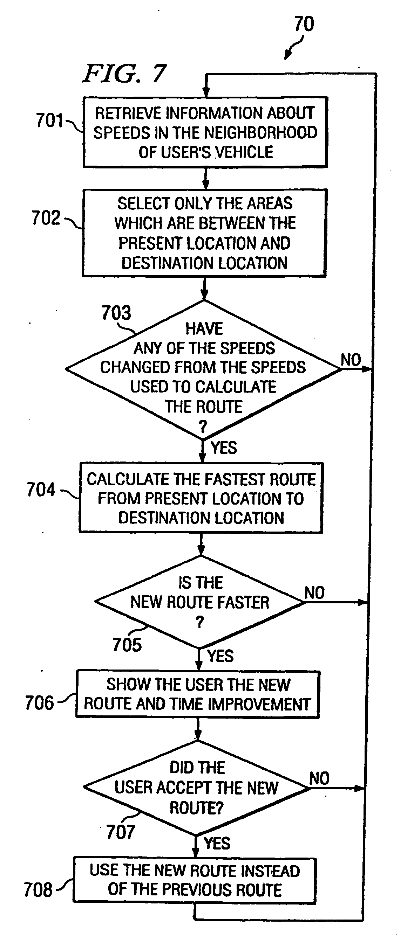

FIGURE 7 shows one embodiment 70 of a flow chart which can be utilized to control the navigation system in order to provide dynamic updating of a selected route.

Process 701 retrieves information about speeds of other vehicles in the neighborhood of the user's vehicle. As discussed above, this speed information can be retrieved from memory stored along the road as obtained from other vehicles; from speed information communicated to the vehicle; from traffic broadcast data of accidents; or from any number of other sources. This communicated information can, for example, be sent to an email address associated with the vehicle or to an email address associated with the user in the vehicle. If the information is sent to the user's email address, then a communication link would be established between the memory of the user's device for receiving the information and the navigation system. Many other systems can be utilized for retrieving current speed data of vehicles traversing various sub-segments of routes.

Process 702 further refines the area for which the speed information is required. This would include the various sub-routes between the present location and a destination location of the user for this particular route.

Process 703 determines whether the speeds on the sub-routes have changed from the speeds which were used to calculate the present route information for the user.

Process 704 calculates the fastest route from the present location of the user to the destination location for this route. This fastest route would include a calculation of the speeds of the different possible sub-routes.

Process 705 determines if the newly calculated route is faster, in terms of transit time for this user than the previously calculated route.

Process 706 shows (or announces) to the user the newly calculated route and could include the time improvement gained by using this newly calculated route. This information can be provided, for example, on display 10, as discussed above, or could be orally transmitted (for example, speech input/output 66) to the user.

Process 707 determines whether the user has accepted the new route. This acceptance could be, for example, a voice command from the user, or the user could touch a screen to signify acceptance, or the user could turn at the designated next turn point of the new route and the system, upon detection of the turn, would know that the user has accepted the newly calculated route.

Process 708 displays (or announces) the new route once it is determined that the user has accepted the new route. As discussed, this display can be by text, graphics, audible, or a combination thereof.

Although the present invention and its advantages have been described in detail, it should be understood that various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A vehicle navigation system (60), said system comprising:
a navigation route indicator (10, 66) for presenting to a user a travel route based upon the least anticipated transit time between a set of points;
a receiver (62) for accepting data pertaining to current average speeds within an area encompassed by said set of points; **characterized by**:
a database (61) local to said vehicle navigation system (60) and storing historic data on transit times between said points obtained from past transits of at least part of said navigation route by said user or vehicle; and
a processor (65) local to said vehicle navigation system (60) for determining a particular route having the least anticipated transit time from among a plurality of possible routes matching said set of points, said anticipated transit time being determined, at least in part, from historic data and said accepted data.

2. The vehicle navigation system (60) of claim 1 wherein said navigation system further comprises:
a global positioning system receiver (63).

3. The vehicle navigation system of claim 1 further comprising:
means for determining average actual speeds between often utilized end-points, said determined speeds having associated with them a time of day for which said determined speeds are valid.

4. The vehicle navigation system (60) of claim 1 wherein said data pertaining to current average speeds is derived from at least one of the following data sources: radio broadcasts of traffic delays; e-mails directed to said navigation system; the Internet; measured average transit speed data for given route segments; cell phone, wireless broadcast from other vehicles, wireless broadcasts from data collection points.

5. The vehicle navigation system (60) of claim 1 wherein said processor is further operable for utilizing an actual known transit time between said set of points to determine a given route if said actual known transit time is less than said anticipated least transit time.

6. The vehicle navigation system (60) of claim 1 wherein said processor is further operable for accepting updated information during the course of a transit between said given set of points and, based, at least in part, on said accepted updated information, modifying a determined route.

7. A method of determining the least anticipated transit time in a roadway navigation system (60); said method comprising:
accepting from a user at least one end-point to define a navigation route having the least transit time for said user; **characterized by**:
determining anticipated transit times between said end-points for each possible navigation route in dependence on locally stored historically available transit times between said end-points for each possible navigation route obtained from past transits of said navigation route by said user or vehicle and available data pertaining to currently known traffic delays between said end-points for each possible navigation route; and
based on said determined anticipated transit times, communicating a navigation route having the least transit time between said endpoints.

8. The method of claim 7 further comprising:
adjusting said communicated navigation route for the time of day for such transit.

9. The method of claim 7 further comprising:
modifying from time to time said communicated navigation route based upon data pertaining to currently known traffic delays between said end-points along said communicated navigation route.

## Patentansprüche

1. Ein Fahrzeugnavigationssystem (60), wobei das System folgende Merkmale aufweist:
einen Navigationsroutenindikator (10, 66) zum Präsentieren einer Fahrtroute einem Benutzer auf der Basis der geringsten erwarteten Durchfahrtszeit zwischen einem Satz von Punkten;
einen Empfänger (62) zum Annehmen von Daten, die zu aktuellen durchschnittlichen Geschwindigkeiten innerhalb eines Bereichs gehören, der durch den Satz von Punkten eingeschlossen ist; **gekennzeichnet durch**:
eine Datenbank (61), die auf das Fahrzeugnavigationssystem (60) örtlich begrenzt ist und historische Daten über Durchfahrtszeiten zwischen den Punkten speichert, die aus vergangenen Durchfahrten zumindest eines Teils der Navigationsroute **durch** den Benutzer oder das Fahrzeug erhalten werden; und
einen Prozessor (65), der auf das Fahrzeugnavigationssystem (60) örtlich begrenzt ist, zum Bestimmen einer speziellen Route mit der geringsten erwarteten Durchfahrtszeit aus einer Mehrzahl von möglichen Routen, die mit dem Satz von Punkten übereinstimmen, wobei die erwartete Durchfahrtszeit zumindest zum Zeit aus historischen Daten und den angenommenen Daten bestimmt wird.

2. Das Fahrzeugnavigationssystem (60) gemäß Anspruch 1, wobei das Navigationssystem ferner folgendes Merkmal aufweist:
einen Globalpositionierungssystem-Empfänger (63).

3. Das Fahrzeugnavigationssystem gemäß Anspruch 1, das ferner folgendes Merkmal aufweist:
eine Einrichtung zum Bestimmen durchschnittlicher tatsächlicher Geschwindigkeiten zwischen häufig verwendeten Endpunkten, wobei den bestimmten Geschwindigkeiten eine Tageszeit zugeordnet ist, für die die bestimmten Geschwindigkeiten gültig sind.

4. Das Fahrzeugnavigationssystem (60) gemäß Anspruch 1, bei dem die Daten, die zu aktuellen durchschnittlichen Geschwindigkeiten gehören, von zumindest einer der folgenden Datenquellen abgeleitet sind: Rundfunksendungen von Verkehrsverzögerungen; E-Mails, die an das Navigationssystem gerichtet sind; das Internet; gemessene durchschnittliche Durchfahrtsgeschwindigkeitsdaten für gegebene Routensegmente; Mobiltelefon, drahtlose Rundsendung von anderen Fahrzeugen, drahtlose Rundsendungen von Datensammelpunkten.

5. Das Fahrzeugnavigationssystem (60) gemäß Anspruch 1, bei dem der Prozessor ferner zum Nutzen einer tatsächlichen bekannten Durchfahrtszeit zwischen dem Satz von Punkten wirksam ist, um eine gegebene Route zu bestimmen, falls die tatsächliche bekannte Durchfahrtszeit geringer als die erwartete geringste Durchfahrtszeit ist.

6. Das Fahrzeugnavigationssystem (60) gemäß Anspruch 1, bei dem der Prozessor ferner zum Annehmen aktualisierter Informationen während des Verlaufs einer Durchfahrt zwischen dem gegebenen Satz von Punkten und zum Modifizieren einer bestimmten Route zumindest zum Teil basierend auf den angenommenen aktualisierten Informationen wirksam ist.

7. Ein Verfahren zum Bestimmen der geringsten erwarteten Durchfahrtszeit bei einem Straßennavigationssystem (60); wobei das Verfahren folgende Schritte aufweist:
Annehmen zumindest eines Endpunkts von einem Benutzer, um eine Navigationsroute mit der geringsten Durchfahrtszeit für den Benutzer zu definieren; **gekennzeichnet durch**:
Bestimmen erwarteter Durchfahrtszeiten zwischen den Endpunkten für jede mögliche Navigationsroute in Abhängigkeit von lokal gespeicherten historisch verfügbaren Durchfahrtszeiten zwischen den Endpunkten für jede mögliche Navigationsroute, die aus vergangenen Durchfahrten der Navigationsroute **durch** den Benutzer oder das Fahrzeug erhalten werden, und verfügbaren Daten, die zu aktuell bekannten Verkehrsverzögerungen zwischen den Endpunkten für jede mögliche Navigationsroute gehören; und
Übermitteln einer Navigationsroute mit der geringsten Durchfahrtszeit zwischen den Endpunkten basierend auf den bestimmten erwarteten Durchfahrtszeiten.

8. Das Verfahren gemäß Anspruch 7, das ferner folgenden Schritt aufweist:
Einstellen der übermittelten Navigationsroute auf die Tageszeit für eine derartige Durchfahrt.

9. Das Verfahren gemäß Anspruch 7, das ferner folgenden Schritt aufweist:
Modifizieren der übermittelten Navigationsroute von Zeit zu Zeit auf der Basis von Daten, die zu aktuell bekannten Verkehrsverzögerungen zwischen den Endpunkten entlang der übermittelten Navigationsroute gehören.

## Revendications

1. Système de navigation de véhicule (60), ledit système comprenant :
➢ un indicateur d'itinéraire de navigation (10, 66) pour présenter à un utilisateur un itinéraire de déplacement basé sur le plus petit temps de transit anticipé entre un ensemble de points ;
➢ un récepteur (62) pour recevoir des données relatives aux vitesses moyennes actuelles dans une zone englobée par ledit ensemble de points ;
**caractérisé par** :
➢ une base de données (61) locale audit système de navigation de véhicule (60) et mémorisant des données d'historique concernant des temps de transit entre lesdits points obtenues à partir de transits antérieurs d'au moins une partie dudit itinéraire de navigation par ledit utilisateur ou véhicule ; et
➢ un processeur (65) local audit système de navigation de véhicule (60) pour déterminer un itinéraire particulier ayant le plus petit temps de transit anticipé parmi une pluralité d'itinéraires possibles correspondant audit ensemble de points, ledit temps de transit anticipé étant déterminé, au moins en partie, à partir de données d'historique et desdites données reçues.

2. Système de navigation de véhicule (60) selon la revendication 1, dans lequel ledit système de navigation comprend en outre un récepteur de système GPS (Global Positioning System) (63).

3. Système de navigation de véhicule selon la revendication 1, comprenant en outre des moyens pour déterminer des vitesses moyennes réelles entre des points d'extrémité souvent utilisés, lesdites vitesses déterminées étant associées à une heure du jour pour laquelle lesdites vitesses déterminées sont valides.

4. Système de navigation de véhicule (60) selon la revendication 1, dans lequel lesdites données relatives à des vitesses moyennes actuelles sont déduites d'au moins l'une des sources de données suivantes : des diffusions radio de retard de trafic ; des courriers électroniques adressés audit système de navigation ; l'Internet ; des données de vitesses de transit moyennes mesurées pour des segments d'itinéraire donnés ; une diffusion sans fil à partir d'autres véhicules, des diffusions sans fil à partir de points de collecte de données, par téléphone cellulaire.

5. Système de navigation de véhicule (60) selon la revendication 1, dans lequel ledit processeur peut en outre être mis en oeuvre pour utiliser un temps de transit connu réel entre ledit ensemble de points pour déterminer un itinéraire donné si ledit temps de transit connu réel est inférieur audit plus petit temps de transit anticipé.

6. Système de navigation de véhicule (60) selon la revendication 1, dans lequel ledit processeur peut en outre être mis en oeuvre pour recevoir des informations mises à jour au cours d'un transit entre ledit ensemble donné de points et pour, sur la base, au moins en partie, desdites informations mises à jour reçues, modifier un itinéraire déterminé.

7. Procédé de détermination du plus petit temps de transit anticipé dans un système de navigation de véhicule (60) ; ledit procédé comprenant l'étape consistant à :
➢ recevoir d'un utilisateur au moins un point d'extrémité pour définir un itinéraire de navigation ayant le plus petit temps de transit pour ledit utilisateur ; **caractérisé par** les étapes consistant à :
➢ déterminer des temps de transit anticipés entre lesdits points d'extrémité pour chaque itinéraire de navigation possible en fonction de temps de transit disponibles d'historique mémorisé localement entre lesdits points d'extrémité pour chaque itinéraire de navigation possible obtenus à partir de transits antérieur dudit itinéraire de navigation par ledit utilisateur ou véhicule et de données disponibles relatives à des retards de trafic actuellement connus entre lesdits points d'extrémité pour chaque itinéraire de navigation possible ; et
➢ sur la base desdits temps de transit anticipés déterminés, communiquer un itinéraire de navigation ayant le plus petit temps de transit entre lesdits points d'extrémité.

8. Procédé selon la revendication 7, comprenant en outre l'étape consistant à ajuster ledit itinéraire de navigation communiqué pour l'heure du jour pour ce transit.

9. Procédé selon la revendication 7, comprenant en outre l'étape consistant à modifier de temps en temps ledit itinéraire de navigation communiqué sur la base de données relatives à des retards de trafic actuellement connus entre lesdits points d'extrémité le long dudit itinéraire de navigation communiqué.
